# EUROPEAN PATENT SPECIFICATION

(11) **EP 4 353 985 B1**
(45) Date of publication and mention of the grant of the patent: **30.04.2025**
(21) Application number: 22212157.6
(22) Date of filing: 08.12.2022
(51) Int. Cl.: F16D 55/228, F16D 55/226, F16D 65/18

(54) **BRAKE DEVICE, BRAKE SYSTEM, AND VEHICLE**
BREMSVORRICHTUNG, BREMSSYSTEM UND FAHRZEUG
DISPOSITIF DE FREIN, SYSTÈME DE FREIN ET VÉHICULE

(30) Priority: 13.10.2022 KR 20220131538
(43) Date of publication of application: 17.04.2024
(73) Proprietor: Hyundai Mobis Co., Ltd., Gangnam-gu Seoul 06141 (KR)
(72) Inventor: CHOI, Moo Jin, 17056 Yongin-si (KR)
(74) Representative: Frenkel, Matthias Alexander

(56) References cited:
- WO-A1-2015/098781
- US-A1- 2021 348 663

## Description

### TECHNICAL FIELD

The present embodiments relate to a brake device applicable to a vehicle and a vehicle with a brake device installed therein, and more particularly to an opposed brake device implemented integrally with an electronic parking brake and a vehicle with the brake device installed therein.

### BACKGROUND

A brake device mounted in a vehicle is a device for decelerating, stopping, or maintaining a stopped state of a vehicle while driving and is located inside a rotating wheel, and brakes a vehicle by strongly pressing a disc-shaped brake disc rotating together with the wheel using brake pads from both sides.

In a conventional brake device, two brake pads disposed on both sides of a disc are supported to move forward or backward on an accommodation surface of a caliper body fixed to a vehicle. A pad support pin for guiding forward or backward movement of the brake pads, and a spring member for elastically supporting upper parts of two pad plates to prevent vibration of the pad plates and achieving a smooth return operation are installed.

The brake device may be largely divided into a drum-type brake device and a disc-type brake device. The drum-type brake device uses a method of stopping using a shoe in contact with an inner surface of a cylindrical drum, and the disc-type brake device stops the brake pad by contacting a surface of the brake disc rotating together with the wheel. The disc-type brake device has a caliper that is a housing in which the brake pad is located and is coupled to the wheel, and has a simpler structure and a smaller volume than the drum-type brake device and thus is applied to passenger cars. Only one of the two types may be used or the disc-type brake device and the drum-type brake device may be applied the front and to the rear, respectively.

The disc type may be classified into a fixed opposed caliper and a sliding caliper.

The opposed caliper uses a method in which a caliper body is in contact with a brake disc by pressing the brake pad from both sides while being fixed. This method is efficient in that the opposed caliper has a symmetrical structure and has excellent braking force, but in this case, a volume increases because pistons for applying pressure from both sides need to be located on both sides.

The sliding caliper includes a piston pressing only a brake pad at one side and has a structure in which the caliper body slides and brakes by a reaction that pushes the disc. Since the piston is provided on only one side, it is easy to implement the piston and prevents the structure of the caliper from becoming enlarged, and advantageously, there is no need to adjust a speed of the pistons on both sides equally.

In the former case, the brake disc is always fixed at the center of the caliper, but in the latter case, the position of the caliper is slidably coupled on the brake disc.

The vehicle may include a parking brake in addition to the main braking brake. The parking brake is not a brake for braking while driving, but a brake to fix a parked state. In a traditional parking brake, a rear wheel is held with a cable to fix wheels by pulling a lever located on a side of a driver seat. The parking brake has evolved from a hand-operated side lever type to a foot parking brake type operated by foot.

A brake of a passenger vehicle that is recently released is also called an electric parking brake (EPB) as an electronic parking brake. The electronic parking brake may be operated simply with a button, and rotation of the disc is limited by pressing the brake disc using a motor, not a wire.

The electronic parking brake includes one gear and one screw rotated by a motor, and may be installed inside the brake disc. The electronic parking brake uses a parking brake method that is applied to recently released high-end vehicles because the electronic parking brake is conveniently manipulated and uses an auto hold function.

However, in the case of an opposed type brake disc, since the main braking caliper is fixed, the parking brake needs to also be pressed simultaneously from both sides of the brake disc, but it is difficult to place the motor, gear, and piston on both sides of the main braking system, and accordingly, there is a problem that the electronic parking brake needs to be separately provided from the main braking brake.

WO 2015/098781 A1 discloses a disc brake device including a floating caliper radially superimposed on an opposed piston caliper. The opposed piston caliper is configured to move a pair of pads sandwich a rotor. The floating caliper is supported in an axially displaceable manner on the opposed piston caliper and provides a parking braking mechanism. The parking brake mechanism includes a claw portion that is the outer side pressing portion and a second piston which is the inner side pressing portion mounted. The claw portion is configured to face and press the outer pad and the second piston is configured to face and press the inner pad. Guide pins are provided on the opposed piston caliper body and the floating caliper has guide holes in the arm portions. The guide pins extend from the from the opposed piston caliper body through the guide hole of the floating caliper and till the other side of the arm portions.

US 2021/348663 A1 discloses a brake device including a fixed caliper system and a sliding caliper system.

### SUMMARY

An object of embodiments of the present invention provides a brake device including an opposed brake device applied as a main braking brake device and an electronic parking brake applied as a parking brake device, which are integrated into each other.

It will be appreciated by persons skilled in the art that the objects that could be achieved with the present invention are not limited to what has been particularly described hereinabove and the above and other objects that the present invention could achieve will be more clearly understood from the following detailed description.

According to the present invention, a brake device is set forth in claim 1. Preferred embodiments are provided in dependent claims.

The main braking caliper body may include a first accommodation part that is located in a direction of the second surface of the first brake pad and into which the locking part of the parking caliper body is inserted, and a second accommodation part that is located in a direction of the second surface of the second brake pad and including the parking piston positioned thereon.

The first accommodation part may include a stopper having one side that is opened to expose at least a portion of the first brake pad, and another side limiting a movement range of the parking caliper body.

An upper surface of the main braking caliper body may be opened to expose a top of the brake pad part, and the parking caliper body may include an upper part covering at least a portion of an opened top of the main braking caliper body and connecting the locking part and the parking piston.

The main braking caliper body includes a guide hole extending in a direction parallel to a direction in which the parking piston moves, the parking caliper body includes a guide rod inserted into the guide hole, and the guide rod is configured to slide within the guide hole when the parking piston is driven.

The brake device further includes an assembly bolt coupling the guide rod to the parking caliper body.

The main braking piston may include a first main braking piston configured to pressure the second surface of the first brake pad, and a second main braking piston configured to pressure the second surface of the second brake pad, and the first main braking piston and the second main braking piston may operate symmetrically to each other.

The brake device may be configured such that, when the parking piston is driven, the parking caliper body moves in a direction of the second brake pad with respect to the main braking caliper body.

The brake device may be configured such that an extension length of the parking piston when the parking piston is driven corresponds to a sum of a moving distance of the second brake pad and a moving distance of the parking caliper body.

One pair of the second main braking pistons may be provided in a perpendicular direction to a direction in which one pair of the second main braking pistons move, and the parking piston may be located between the pair of second main braking pistons.

The brake device may further include a parking motor located at an upper side of the parking piston and providing driving force to the parking piston, and a pinion gear transmitting force of the parking motor, wherein a rotation axis of the parking motor may be parallel to a direction in which the parking piston is pressurized.

According to the present invention a brake system according to claim 10 is also provided. According to the present invention a vehicle according to claim 11 is further provided.

The wheel may include an outer surface facing outward of the vehicle and an inner surface facing inward, the first brake pad may be located on the outer surface of the wheel, and the second brake pad and the parking piston may be located on the inner surface of the wheel.

### BRIEF DESCRIPTION OF THE DRAWINGS

FIG. 1 is a front view of a brake device and a brake disc according to any one of embodiments of the present invention.
FIG. 2 is a perspective view of a brake device according to any one of embodiments of the present invention.
FIG. 3 is a cross-sectional view taken along A-A of FIG. 2.
FIG. 4 is a perspective view showing a main braking caliper body of a brake device according to any one of embodiments of the present invention.
FIG. 5 is an exploded perspective view of the brake device 100 according to any one of embodiments of the present invention.
FIG. 6 is a cross-sectional view taken along B-B of FIG. 2.

### DETAILED DESCRIPTION

Hereinafter, the present invention will be described more fully with reference to the accompanying drawings, in which exemplary embodiments of the present invention are shown. The present invention may, however, be embodied in many different forms and should not be construed as being limited to the embodiments set forth herein; rather, these embodiments are provided so that this disclosure will be thorough and complete, and will fully convey the concept of the present invention, which is defined by the appended claims, to those skilled in the art.

Terms used herein are used to describe specified embodiments and are not intended to limit the scope of another embodiment. The terms of a singular form may include plural forms unless otherwise specified. As used herein, "comprises" and/or "comprising" does not exclude the presence or addition of one or more other components in addition to the stated components. Like reference numerals refer to like elements throughout, and "and/or" includes each and every combination of one or more of the recited elements. Although "first", "second", etc. are used to describe various elements, these elements are not limited by these terms, needless to say. These terms are only used to distinguish one component from another. Therefore, needless to say, the first component mentioned below may be the second component within the scope of the present invention defined by the appended claims.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Spatially relative terms "below", "beneath", "lower", "above", "upper", etc. may be used to easily describe a correlation between one component and other components. A spatially relative term needs to be understood as a term that includes different directions of components during use or operation in addition to directions shown in the drawings. For example, when a component shown in the drawing is turned over, a component described as "beneath" or "beneath" of another component may be placed "above" of the other component. Accordingly, the exemplary term "below" may include both directions below and above. Components may also be oriented in other orientations, and thus spatially relative terms may be interpreted according to orientation.

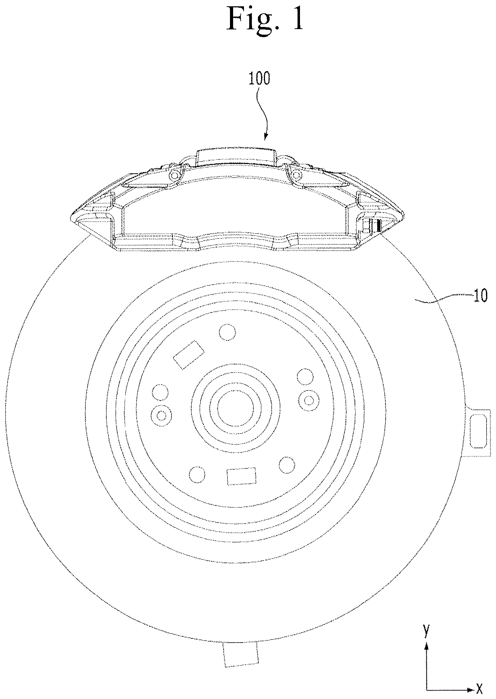

FIG. 1 is a front view of a brake device 100 and a brake disc 10 according to any one of embodiments of the present invention. Hereinafter, in describing the brake device 100, a reference of the up-down (y-axis) and left-right (x-axis) directions, and front and rear (z-axis) directions may be based on the brake device 100 illustrated in FIG. 1.

Wheels of the vehicle may be generally disposed on both left and right sides, and a front direction shown in FIG. 1 may be disposed to face the outside of the vehicle. Depending on a type of the brake device 100, front and rear shapes may have a symmetrical shape (opposed caliper brake), or a piston structure may be provided at only one side (sliding caliper brake).

The opposed caliper brake may use a method in which a brake pad part 120 is pressed from both sides to come in contact with the brake disc 10 in the state in which a main braking caliper body 110 is fixed. This method has excellent braking power in terms of a symmetrical structure, but since pistons for pressurization from both sides need to be located on both sides, the volume of an outer part of a wheel may increase and piston speeds on both sides need to be synchronized.

The sliding caliper may include a piston that presses only the brake pad 12 at one side and has a structure in which the main braking caliper body 110 slides and brakes by a reaction that pushes the brake disc with the brake pad at one side.

Since the main braking piston is provided on only one side, it is easy to implement the device, and there is an advantage that it is not necessary to adjust speeds of the pistons at both sides equally. However, braking force is inferior to the opposed caliper brake, and an opposed caliper brake system is introduced for high-end vehicles.

In the opposed caliper brake, the brake disc is always located at the center of the caliper body, but in the slide caliper brake, the position of the caliper body is slidably coupled to the brake disc.

Referring to FIG. 1, the brake device 100 may apply braking to the wheel of the vehicle by pressing a surface of the brake disc 10. The brake disc 10 and a knuckle assembly may be components connected to the wheels of the vehicle.

The brake disc 10 may rotate with rotation of the wheels while the vehicle drives. When the brake device 100 applies pressure to the brake disc 10, resistance may be generated to rotation of the brake disc 10, thereby reducing rotational speed of the wheel. That is, the vehicle may be braked.

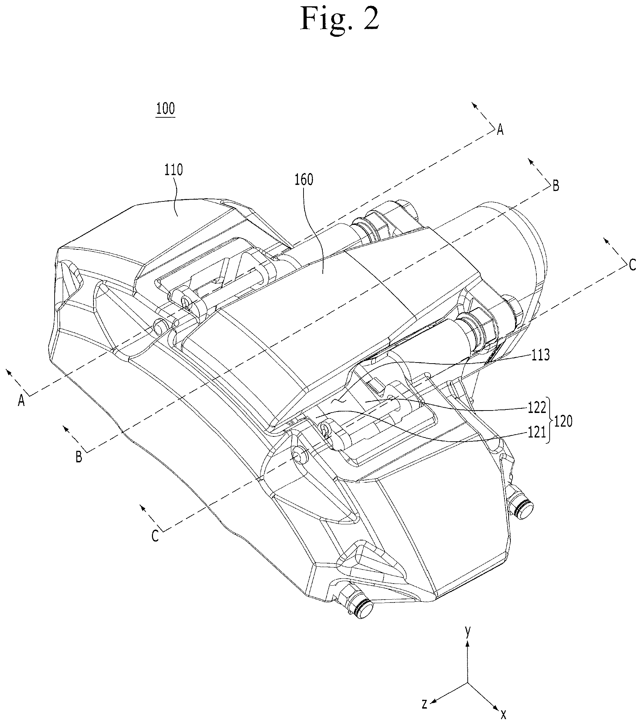

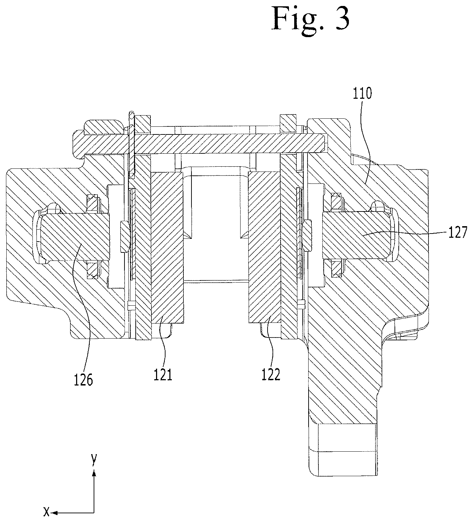

FIG. 2 is a perspective view of the brake device 100 according to any one of embodiments of the present invention. FIG. 3 is a cross-sectional view taken along A-A of FIG. 2.

The brake device 100 according to the present invention includes the main braking caliper body 110 into which one side of the brake disc 10 is inserted and one pair of brake pads 120 mounted on the main braking caliper body 110 to face both surfaces of the brake disc 10.

The brake disc 10 located in front of the main braking caliper body (facing outward of the vehicle) is referred to as the first brake disc 10 and the brake disc 10 located at the rear is referred to as the second brake disc 10.

The brake device 100 according to the present invention is an opposed caliper brake device 100, in which the brake discs 10 on both sides move simultaneously and are pressed, and the positions of the main braking caliper bodies 110 with respect to the brake disc 10 may correspond to each other in a direction in which the brake pad part 120 moves.

One pair of brake pads 120 are disposed to allow first surfaces as friction surfaces to face each other, and one side of the brake disc 10 may be inserted into a space 113 between one pair of brake pads 121 and 122.

The opposed caliper brake may be symmetrical left and right and may have the same structure in the inside and the outside of the wheel, but the brake device 100 according to the present invention has an integrated-type parking brake 160 in which only a parking piston 164 is located only at one side.

The parking brake 160 is a device for fixing the wheel to prevent a vehicle from pushing during parking and is distinguished from a main braking brake 150 that reduces a rotational speed of the wheel using friction.

The main braking brake 150 may reduce a speed of the wheel using friction, but the parking brake 160 may limit rotation of the wheel using a separate cable or linkage. Conventionally, a mechanical method is mainly used, but recently, an Electronic Parking Brake (EPB) using a motor has been mainly applied to a vehicle.

The conventional parking brake uses a drum type, but recently, the parking brake 160 may also be implemented using the brake disc 10 of the main braking brake 150.

By introducing the electronic parking brake 160, the parking brake 160 may automatically operate when stopped without a separate operation, and a stop and go function that releases the parking brake 160 when starting again may be mounted on the vehicle to enlarge a function of the vehicle.

The electronic parking brake 160 includes the parking piston 164 for pressing the brake disc 10 using a parking motor and a plurality of pinion gears 163 for transmitting power between the parking motor and the parking piston 164.

The parking brake 160 may be separately provided from the main braking brake 150, and a parking caliper body 161 including the parking piston 164 pressurizing the brake disc 10 may be coupled to the brake disc 10 separately from the main braking brake 150. As such, a form in which the main braking brake 150 and the parking brake 160 are provided independently may use a form in which two caliper bodies are coupled to the brake disc 10.

According to the present invention, to simplify the configuration and reduce the number of parts, the brake pad part 120 of the main braking brake 150 may also be used for parking, and thus the main braking brake 150 and the parking brake 160 may be integrated into each other.

However, the parking piston 164 and a motor 165 are located on one side (in a rear direction), the parking brake 160 may be applied only to the sliding caliper brake that is to be moved on the brake disc 10.

Although preference for the opposed caliper brake increases due to braking power and appearance, it is difficult to implement a parking brake integrally with the opposite main braking brake, and thus there is a limitation in that two caliper bodies need to be installed separately.

The present invention provides a main braking/parking integrated brake device by adding the slidable parking caliper body 161 to the main braking caliper body 110 to integrally implement the electronic parking brake 160 in the opposed caliper brake system.

As shown in FIG. 3, the main braking brake 150 may include a first main braking piston 126 and a second main braking piston 127 that pressurize one pair of brake pads 121 and 122, respectively. The first main braking piston 126 may be positioned in contact with a second surface of the first brake pad 121 and the second main braking piston 127 may be positioned in contact with a second surface of the second brake pad 122.

The first main braking piston 126 and the second main braking piston 127 may move symmetrically and simultaneously, and simultaneously move the first brake pad 121 and the second brake pad 122 in a direction of the brake disc 10. In this case, the position of the main braking caliper body 110 with respect to the brake disc 10 may not change.

A pair of the first main braking piston 126 and the second main braking piston 127 may each be provided in a horizontal direction (y-axis direction) to uniformly apply a force to a long brake pad in a horizontal direction to increase braking force. Therefore,. FIG. 3 may also be a cross-sectional view taken along C-C of FIG. 2.

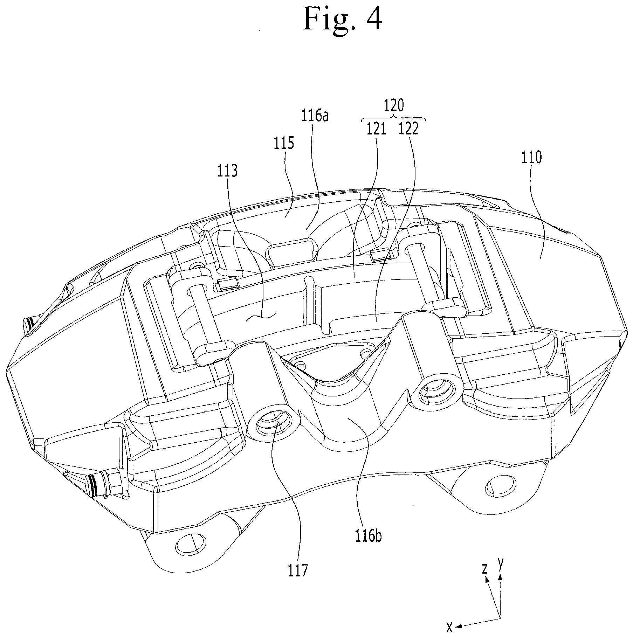

FIG. 4 is a perspective view showing the main braking caliper body 110 from which the parking caliper body 161 of the brake device 100 is separated according to any one of embodiments of the present invention. A general opposed caliper body may have a closed top, but the main braking caliper body 110 according to the present invention may be opened at the top to connect the parking caliper body 161.

The main braking caliper body 110 may include a first caliper body positioned at the front and a second caliper body positioned at the rear, and the brake pad part 120 may be disposed in the internal space 113 formed between the first caliper body and the second caliper body. A lower portion of the inner space of the main braking caliper body 110 may be opened to insert the brake disc 10 thereinto, and an upper portion may be opened to couple the parking brake 160 thereto as described above.

An accommodation part 116 may be formed in the main braking caliper body 110 to accommodate the parking caliper body 161 thereon, and may include a first accommodation part 116a formed in the first caliper body and a second accommodation part 116b formed in the second caliper body. In both the first accommodation part 116a and the second accommodation part 116b, an upper surface part is open, and the second surface of the brake pad part 120 may be partially exposed.

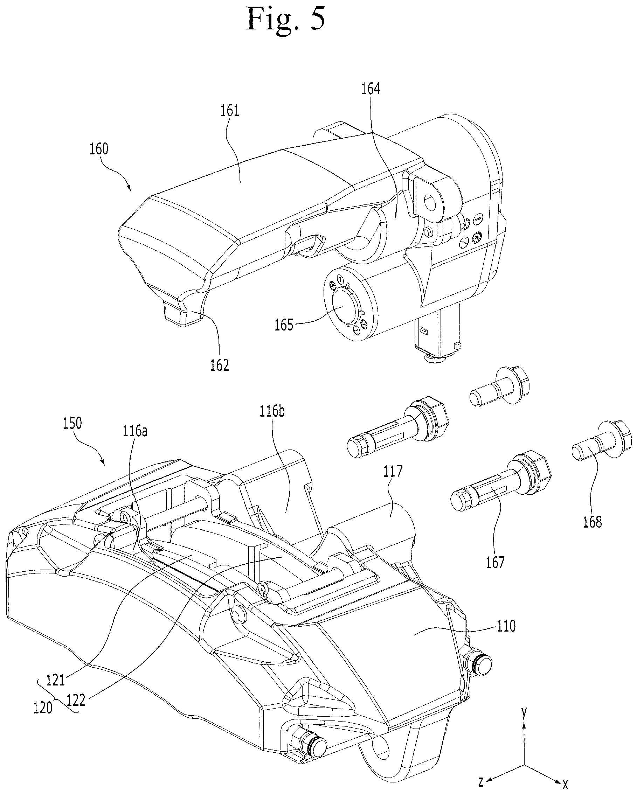

FIG. 5 is an exploded perspective view of the brake device 100 according to any one of embodiments of the present invention. The parking caliper body 161 may be located on an upper surface of the main braking caliper body 110 and may extend in forward and backward directions.

The motor 165 and the parking piston 164 may be located in a rear direction of the main braking caliper body 110, the parking piston 164 may be located on the second accommodation part 116b formed in the second caliper body, and the motor 165 may be located at the rear of the main braking caliper body 110.

The parking piston 164 may be located at the center of the horizontal direction (y-axis direction) of the brake pad part 120, and may be located at the center of one pair of the second main braking pistons 127 arranged in a horizontal direction.

Since the parking caliper body 161 is coupled to an upper side of the main braking caliper body 110, the parking piston 164 may be positioned slightly above the second main braking pistons 127.

The front of the parking caliper body 161 includes a locking part 162 in contact with the second surface of the first brake pad 121, and may be inserted into the first accommodation part 116a formed in the first body.

The parking caliper body 161 is configured to be slidably coupled to the main braking caliper body 110. The parking caliper body 161 is configured to be coupled to the main braking caliper body 110 through a guide rod 167 inserted into a guide hole 117 formed in the main braking caliper body 110 in such a way that the parking piston 164 moves in a direction in which the parking piston 164 moves, that is, in a direction in which the brake pad part 120 moves.

The guide hole 117 is configured to extend in forward and backward directions of the main braking caliper body 110, that is, parallel to a direction in which the parking piston 164 moves, and the guide rod 167 is configured to slide within the guide hole 117.

When the guide rod 167 is integrally configured with the parking caliper body 161, it may be difficult to couple the parking caliper body 161 to the main braking caliper body 110, and thus after the guide rod 167 is inserted into the guide hole 117, the locking part 162 and the parking piston 164 of the parking caliper body 161 may be coupled to the accommodation part 116 to be accommodated thereon.

Then, the guide rod 167 and the parking caliper body 161 are configured to be coupled to each other through an assembly bolt 168 to assemble the guide rod 167 and the parking caliper body 161. The parking caliper body 161 may be coupled to the main braking caliper body 110 to allow movement in the z-axis direction (forward and backward movement) and limit movement in other directions.

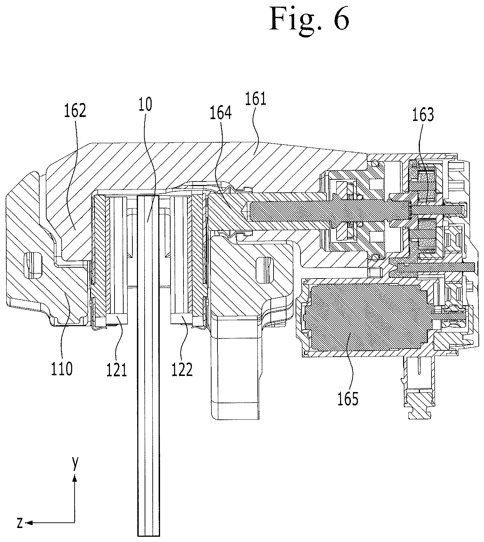

FIG. 6 is a cross-sectional view taken along B-B of FIG. 2, and as seen from FIG. 6, the parking brake 160 is coupled to the main braking brake 150. The second accommodation part 116b may be opened in forward and backward directions, the second surface of the second brake pad 122 may be exposed at the front, and a shaft of the parking piston 164 may extend at the rear.

Since the parking motor 165 and the parking piston 164 are vertically disposed in parallel, a plurality of pinion gears for transmitting rotational force of the parking motor 165 may be disposed.

The parking piston 164 may include a piston shaft that rotates by receiving the rotational force of the motor 165 and a cylinder that moves linearly in an extension direction of the piston shaft when the piston shaft rotates.

The parking piston 164 may be in contact with the second surface of the second brake pad 122, and the locking part 162 of the parking caliper body 161 may be in contact with the second surface of the first brake pad 121. An upper portion connecting the locking part 162 and the parking piston 164 may extend forward and backward across the top of the pair of brake pads 120.

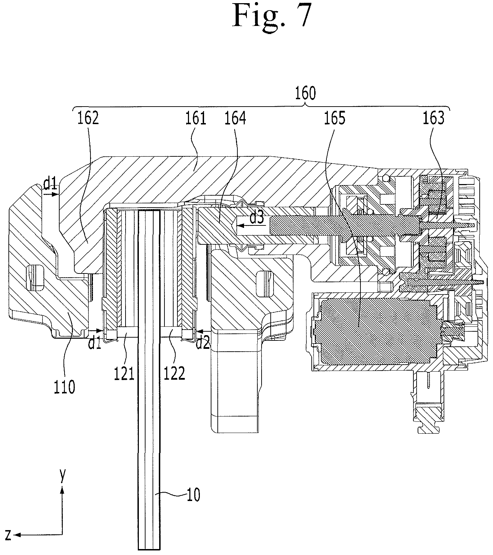

FIG. 7 is a diagram showing the state in which the parking piston 164 is operated and the brake pad part 120 pressurizes the brake disc 10 in FIG. 6.

The parking piston 164 may have a longer length and apply a force in the z-axis direction, that is, in a forward direction, and press and move the second brake pad 122 in the direction of the brake disc 10. In this case, when the second brake pad 122 comes into contact with the brake disc 10, the parking caliper body 161 may move in a rear direction, and the first brake pad 121 may move in a direction of the brake disc 10.

The second brake pad 122 and the first brake pad 121 may move simultaneously or the first brake pad 121 may move after the second brake pad 122 moves as described above.

When the parking piston 164 extends, the first brake pad 121 may be pressurized by pushing the parking caliper body 161 in an opposite direction to the direction in which the parking piston 164 extends (action and reaction) while pressuring the second brake pad 122.

An extension length d3 of the parking piston 164 may correspond to the sum of a moving distance d1 of the first brake pad 121 and a moving distance d2 of the second brake pad 122 and a moving distance of the first brake pad 121 may be equal to a moving distance of a parking caliper.

The main braking caliper body 110 is an opposed caliper brake and may always in the same position relative to the brake disc 10 in the z-axis direction (forward and backward directions), but the parking caliper body 161 may have a different relative position with respect to the main braking caliper body 110 and the brake disc 10 to press the brake pad part 120 while parking.

An operation of the parking caliper body 161 uses a slide caliper method, and the brake device 100 according to the present invention may increase braking performance using an opposed caliper method, and simultaneously, may implement an Electronic Parking Brake (EPB) driven using the slide caliper method using one brake pad part 120.

The parking caliper body 161 is slidable using the main braking caliper body 110 as a torque member of the parking caliper body 161, and there may be an advantage in that the main braking brake 150 and the parking brake 160 are easily assembled and disassembled integrally.

According to any one of embodiments of the present invention, an operation of the parking caliper body uses a slide caliper method, and the brake device according to the present invention may increase braking performance using an opposed caliper method, and simultaneously, may implement an Electronic Parking Brake (EPB) driven using the slide caliper method using one brake pad.

The parking caliper body is slidable using the main braking caliper body as a torque member of the parking caliper body, and there may be an advantage in that the main braking brake and the parking brake are easily assembled and disassembled integrally.

It will be appreciated by persons skilled in the art that the effects that could be achieved with the present invention are not limited to what has been particularly described hereinabove and other advantages of the present invention will be more clearly understood from the above detailed description.

The detailed description of the exemplary embodiments of the present invention disclosed as described above is provided to enable those skilled in the art to make and practice the present invention. Although the above has been described with reference to exemplary embodiments of the present invention, it will be understood by those skilled in the art that various modifications and changes are covered by the scope of the present invention as defined by the appended claims.

## Claims

1. A brake device (100) comprising:
a main braking brake (150) comprising:
a main braking caliper body (110);
a brake pad part (120) including a first brake pad (121) and a second brake pad (122) that are arranged at one side and another side of the main braking caliper body (110) and have first surfaces as friction surfaces facing each other; and
a main braking piston configured to pressurize second surfaces of the first brake pad (121) and the second brake pad (122) to shorten a distance between the first brake pad (121) and the second brake pad (122); and
a parking brake (160) comprising:
a parking caliper body (161) coupled to the main braking caliper body (110) and including a locking part (162) caught by the second surface of the first brake pad (121); and
a parking piston (164) installed on the parking caliper body (161) and configured to pressure the second surface of the second brake pad (122),
wherein the parking brake (160) is configured such that, when the parking piston (164) moves and pressurizes the second brake pad (122), the locking part (162) of the parking caliper body (161) moves the first brake pad (121) toward the second brake pad (122),
**characterized in that**:
the main braking caliper body (110) includes a guide hole (117) extending in a direction parallel to a direction in which the parking piston (164) moves,
wherein the parking caliper body (161) includes a guide rod (167) inserted into the guide hole (117), and
wherein the guide rod (167) is configured to slide within the guide hole (117) when the parking piston (164) is driven,
wherein the brake device (100) further includes an assembly bolt (168) coupling the guide rod (167) to the parking caliper body (161).

2. The brake device (100) of claim 1, wherein the main braking caliper body (110) includes:
a first accommodation part (116a) that is located in a direction of the second surface of the first brake pad (121) and into which the locking part (162) of the parking caliper body (161) is inserted; and
a second accommodation part (116b) that is located in a direction of the second surface of the second brake pad (122) and including the parking piston (164) positioned thereon.

3. The brake device (100) of claim 2, wherein the first accommodation part (116a) includes a stopper having one side that is opened to expose at least a portion of the first brake pad (121), and another side limiting a movement range of the parking caliper body (161).

4. The brake device (100) of claim 2 or 3, wherein an upper surface of the main braking caliper body (110) is opened to expose a top of the brake pad part (120), and
wherein the parking caliper body (161) includes an upper portion covering at least a portion of an opened top of the main braking caliper body (110) and connecting the locking part (162) and the parking piston (164).

5. The brake device (100) of any one of claims 1 to 4, wherein the main braking piston includes a first main braking piston (126) configured to pressure the second surface of the first brake pad (121), and a second main braking piston (127) configured to pressure the second surface of the second brake pad (122), and
wherein the first main braking piston (126) and the second main braking piston (127) operate symmetrically to each other.

6. The brake device (100) of any one of claims 1 to 5, wherein the brake device (100) is configured such that, when the parking piston (164) is driven, the parking caliper body (161) moves in a direction of the second brake pad (122) with respect to the main braking caliper body (110).

7. The brake device (100) of any one of claims 1 to 6, wherein the brake device (100) is configured such that, when the parking piston (164) is driven, an extension length of the parking piston (164) corresponds to a sum of a moving distance of the second brake pad (122) and a moving distance of the parking caliper body (161).

8. The brake device (100) of claim 5, wherein a pair of the second main braking pistons (127) are provided in a perpendicular direction to a direction in which the pair of the second main braking pistons (127) move, and
wherein the parking piston (164) is located between the pair of second main braking pistons (127).

9. The brake device (100) of any one of claims 1 to 8, further comprising:
a parking motor (165) located at an upper side of the parking piston (164) and providing driving force to the parking piston (164); and
a pinion gear (163) transmitting force of the parking motor (165),
wherein a rotation axis of the parking motor (165) is parallel to a direction in which the parking piston (164) is pressurized.

10. A brake system comprising:
a brake disc (10); and
a brake device (100) according to any of claims 1 to 9,
wherein an end of one side of the brake disc (10) is inserted into the main braking caliper body (110) of the brake device (100).

11. A vehicle comprising:
a car body;
a rotating wheel located at a lower portion of the car body; and
a brake system according to claim 10,
wherein the brake disc (10) of the brake system is coupled to the rotating wheel and rotating with the rotating wheel.

## Patentansprüche

1. Bremsvorrichtung (100) umfassend:
eine Hauptbremse (150) umfassend:
einen Hauptbremssattelkörper (110);
ein Bremsbelagteil (120), das einen ersten Bremsbelag (121) und einen zweiten Bremsbelag (122) umfasst, die an einer Seite und einer anderen Seite des Hauptbremssattelkörpers (110) angeordnet sind und erste Oberflächen als Reibflächen aufweisen, die einander zugewandt sind; und
einen Hauptbremskolben, der dazu eingerichtet ist, zweite Oberflächen des ersten Bremsbelags (121) und des zweiten Bremsbelags (122) mit Druck zu beaufschlagen, um einen Abstand zwischen dem ersten Bremsbelag (121) und dem zweiten Bremsbelag (122) zu verkürzen; und
eine Feststellbremse (160) umfassend:
einen Feststellsattelkörper (161), der mit dem Hauptbremssattelkörper (110) gekoppelt ist und ein Verriegelungsteil (162) umfasst, das von der zweiten Oberfläche des ersten Bremsbelags (121) gefasst wird; und
einen Feststellkolben (164), der am Feststellsattelkörper (161) angebracht ist und so eingerichtet ist, dass er die zweite Oberfläche des zweiten Bremsbelags (122) mit Druck beaufschlagt,
wobei die Feststellbremse (160) so eingerichtet ist, dass, wenn sich der Feststellkolben (164) bewegt und den zweiten Bremsbelag (122) mit Druck beaufschlagt, das Verriegelungsteil (162) des Feststellsattelkörpers (161) den ersten Bremsbelag (121) in Richtung des zweiten Bremsbelags (122) bewegt,
**dadurch gekennzeichnet, dass**:
der Hauptbremssattelkörper (110) ein Führungsloch (117) umfasst, das sich in eine Richtung parallel zu einer Richtung erstreckt, in die sich der Feststellkolben (164) bewegt,
wobei der Feststellsattelkörper (161) eine Führungsstange (167) umfasst, die in das Führungsloch (117) eingesetzt ist, und
wobei die Führungsstange (167) so eingerichtet ist, dass sie innerhalb des Führungslochs (117) gleitet, wenn der Feststellkolben (164) angetrieben wird,
wobei die Bremsvorrichtung (100) weiterhin eine Montageschraube (168) umfasst, die die Führungsstange (167) mit dem Feststellbremssattelkörper (161) verbindet.

2. Bremsvorrichtung (100) nach Anspruch 1, wobei der Hauptbremssattelkörper (110) umfasst:
ein erstes Aufnahmeteil (116a), das in einer Richtung der zweiten Oberfläche des ersten Bremsbelags (121) angeordnet ist und in das das Verriegelungsteil (162) des Feststellbremssattelkörpers (161) eingesetzt ist; und
ein zweites Aufnahmeteil (116b), das in einer Richtung der zweiten Oberfläche des zweiten Bremsbelags (122) angeordnet ist und den darauf angeordneten Feststellkolben (164) umfasst.

3. Bremsvorrichtung (100) nach Anspruch 2, wobei das erste Aufnahmeteil (116a) einen Anschlag umfasst, dessen eine Seite geöffnet ist, um zumindest einen Abschnitt des ersten Bremsbelags (121) freizulegen, und dessen andere Seite einen Bewegungsbereich des Feststellsattelkörpers (161) begrenzt.

4. Bremsvorrichtung (100) nach Anspruch 2 oder 3, wobei eine obere Oberfläche des Hauptbremssattelkörpers (110) geöffnet ist, um eine Oberseite des Bremsbelagteils (120) freizulegen, und
wobei der Feststellsattelkörper (161) einen oberen Abschnitt umfasst, der zumindest einen Abschnitt einer geöffneten Oberseite des Hauptbremssattelkörpers (110) abdeckt und das Verriegelungsteil (162) und den Feststellkolben (164) verbindet.

5. Bremsvorrichtung (100) nach einem der Ansprüche 1 bis 4, wobei der Hauptbremskolben einen ersten Hauptbremskolben (126), der so eingerichtet ist, dass er die zweite Oberfläche des ersten Bremsbelags (121) mit Druck beaufschlagt, und einen zweiten Hauptbremskolben (127) umfasst, der so eingerichtet ist, dass er die zweite Oberfläche des zweiten Bremsbelags (122) mit Druck beaufschlagt, und
wobei der erste Hauptbremskolben (126) und der zweite Hauptbremskolben (127) symmetrisch zueinander arbeiten.

6. Bremsvorrichtung (100) nach einem der Ansprüche 1 bis 5, wobei die Bremsvorrichtung (100) so eingerichtet ist, dass sich der Feststellsattelkörper (161), wenn der Feststellkolben (164) angetrieben wird, in eine Richtung des zweiten Bremsbelags (122) in Bezug auf den Hauptbremssattelkörper (110) bewegt.

7. Bremsvorrichtung (100) nach einem der Ansprüche 1 bis 6, wobei die Bremsvorrichtung (100) so eingerichtet ist, dass, wenn der Feststellkolben (164) angetrieben wird, eine Ausfahrlänge des Feststellkolbens (164) einer Summe einer Bewegungsdistanz des zweiten Bremsbelags (122) und einer Bewegungsdistanz des Feststellsattelkörpers (161) entspricht.

8. Bremsvorrichtung (100) nach Anspruch 5, wobei ein Paar zweiter Hauptbremskolben (127) in einer senkrechten Richtung zu einer Richtung, in der sich das Paar zweiter Hauptbremskolben (127) bewegt, vorgesehen ist, und
wobei der Feststellkolben (164) zwischen dem Paar zweiter Hauptbremskolben (127) angeordnet ist.

9. Bremsvorrichtung (100) nach einem der Ansprüche 1 bis 8, weiterhin umfassend:
einen Feststellmotor (165), der an einer Oberseite des Feststellkolbens (164) angeordnet ist und dem Feststellkolben (164) eine Antriebskraft bereitstellt; und
ein Ritzel (163), das eine Kraft des Feststellmotors (165) überträgt,
wobei eine Rotationsachse des Feststellmotors (165) parallel zu einer Richtung ist, in der der Feststellkolben (164) mit Druck beaufschlagt wird.

10. Bremssystem umfassend:
eine Bremsscheibe (10) und
eine Bremsvorrichtung (100) nach einem der Ansprüche 1 bis 9,
wobei ein Ende einer Seite der Bremsscheibe (10) in den Hauptbremssattelkörper (110) der Bremsvorrichtung (100) eingesetzt ist.

11. Fahrzeug umfassend:
eine Karosserie;
ein rotierendes Rad, das sich an einem unteren Abschnitt der Karosserie befindet; und
ein Bremssystem nach Anspruch 10,
wobei die Bremsscheibe (10) des Bremssystems mit dem rotierenden Rad gekoppelt ist und mit dem rotierenden Rad rotiert.

## Revendications

1. Dispositif de frein (100) comprenant:
un frein principal (150) comprenant:
un corps d'étrier de frein principal (110);
une partie de plaquette de frein (120) comprenant une première plaquette de frein (121) et une seconde plaquette de frein (122) qui sont disposées sur de chaque côté du corps d'étrier de frein principal (110) et ont des premières faces sous forme de surfaces de friction se faisant face les unes aux autres; et
un piston de frein conçu pour mettre sous pression des secondes faces de la première plaquette de frein (121) et de la seconde plaquette de frein (122) pour réduire la distance entre la première plaquette de frein (121) et la seconde plaquette de frein (122); et
un frein de stationnement (160) comprenant:
un corps d'étrier de frein de stationnement (161) accouplé au corps d'étrier de frein principal (110) et comprenant une partie de verrouillage (162) saisie par la seconde face de la première plaquette de frein (121); et
un piston de frein (164) monté sur le corps d'étrier de frein de stationnement (161) et conçu pour mettre sous pression la seconde face de la seconde plaquette de frein (122),
dans lequel le frein de stationnement (160) est conçu de sorte que, lorsque le piston de frein (164) se déplace et met sous pression la seconde plaquette de frein (122), la partie de verrouillage (162) du corps d'étrier de frein de stationnement (161) déplace la première plaquette de frein (121) en direction de la seconde plaquette de frein (122),
**caractérisé en ce que**:
le corps d'étrier de frein principal (110) comprend un trou de guidage (117) parallèle à une direction dans laquelle se déplace le piston de frein (164),
dans lequel le corps d'étrier de frein de stationnement (161) comprend une tige de guidage (167) insérée dans le trou de guidage (117), et
dans lequel la tige de guidage (167) est conçue pour coulisser dans le trou de guidage (117) lorsque le piston de frein (164) est entraîné,
dans lequel le dispositif de frein (100) comprend en outre un boulon d'assemblage (168) accouplant la tige de guidage (167) au corps d'étrier de frein de stationnement (161).

2. Dispositif de freinage (1) selon la revendication 1, dans lequel le corps d'étrier de frein principal (110) comprend:
une première partie de logement (116a) qui est située dans le sens de la seconde face de la première plaquette de frein (121) et dans laquelle est insérée la partie de verrouillage (162) du corps d'étrier de frein de stationnement (161); et
une seconde partie de logement (116b) qui est située dans le sens de la seconde face de la seconde plaquette de frein (122) et sur laquelle est positionné le piston de frein (164).

3. Dispositif de frein (100) selon la revendication 2, dans lequel la première partie de logement (116a) comprend une butée ayant une face qui est ouverte pour rendre visible au moins une partie de la portion de la première plaquette de frein (121), et une autre face limitant l'amplitude de mouvement du corps d'étrier de frein de stationnement (161).

4. Dispositif de frein (100) selon la revendication 2 ou 3, dans lequel une face supérieure du corps d'étrier de frein principal (110) est ouvert pour rendre visible une partie supérieure de la partie de plaquette de frein (120), et
dans lequel le corps d'étrier de frein de stationnement (161) comprend une portion supérieure recouvrant au moins une portion d'une partie supérieure ouverture du corps d'étrier de frein principal (110) et reliant la partie de verrouillage (162) et le piston de frein de stationnement (164).

5. Dispositif de frein (100) selon l'une quelconque des revendications 1 à 4, dans lequel le piston de frein principal comprend un premier piston de frein principal (126) conçu pour mettre sous pression la seconde surface de la première plaquette de frein (121), et un second piston de frein principal (127) conçu pour mettre sous pression la seconde surface de la seconde plaquette de frein (122), et
dans lequel le premier piston de frein principal (126) et le second piston de frein principal (127) fonctionnent symétriquement l'un à l'autre.

6. Dispositif de frein (100) selon l'une quelconque des revendications 1 à 5, dans lequel le dispositif de frein (100) est conçu de sorte que, lorsque le piston de frein de stationnement (164) est entraîné, le corps d'étrier de frein de stationnement (161) se déplace dans un sens de la seconde plaquette de frein (12) par rapport au corps d'étrier de frein principal (110).

7. Dispositif de frein (100) selon l'une quelconque des revendications 1 à 6, dans lequel le dispositif de frein (100) est conçu de sorte que, lorsque le piston de frein de stationnement (164) est entraîné, une longueur d'extension du piston de frein de stationnement (164) corresponde à la somme d'une distance de déplacement de la seconde plaquette de frein (122) et une distance de déplacement du corps d'étrier de frein de stationnement (161).

8. Dispositif de frein (100) selon la revendication 5, dans lequel une paire des seconds pistons de frein de stationnement principaux (127) sont perpendiculaires au sens dans lequel se déplacent les seconds pistons de frein principaux (127) et
dans lequel le piston de frein de stationnement (164) est situé entre les deux seconds pistons de frein principal (127).

9. Dispositif de frein (100) selon l'une quelconque des revendications 1 à 8, comprenant en outre:
un moteur de frein de stationnement (165) situé sur une face supérieure du piston de frein de stationnement (164) et assurant la force d'entraînement au piston de frein de stationnement (164); et
un pignon (163) transmettant la force du moteur de frein de stationnement (165),
dans lequel un axe de rotation du moteur de frein de stationnement (165) est parallèle à un sens dans lequel le piston de frein de stationnement (164) est mis sous pression.

10. Système de frein comprenant:
un disque de frein (10); et
un dispositif de frein (100) selon l'une quelconque des revendications 1 à 9,
dans lequel une extrémité d'une face du disque de frein (10) est insérée dans le corps d'étrier de frein principal (110) du dispositif de frein (100).

11. Véhicule comprenant:
une carrosserie;
une roue qui tourne située dans une portion inférieure de la carrosserie; et
un système de frein selon la revendication 10,
dans lequel le disque de frein (10) du système de frein est accouplé à la roue qui tourne et tourne conjointement avec la roue qui tourne.
